(19)

Europäisches
Patentamt
European
Patent Office
Office européen
des brevets

(11)  **EP 4 293 764 A1**

(12)  **EUROPEAN PATENT APPLICATION**
published in accordance with Art. 153(4) EPC

(43) Date of publication:
**20.12.2023  Bulletin 2023/51**

(21) Application number: **22752805.6**

(22) Date of filing: **10.02.2022**

(51) International Patent Classification (IPC):
**H01M 8/0273** *(2016.01)*     **B32B 27/00** *(2006.01)*
**F16J 15/10** *(2006.01)*      **H01M 8/10** *(2016.01)*

(52) Cooperative Patent Classification (CPC):
**B32B 27/00; F16J 15/10; H01M 8/0273;**
**H01M 8/10;** Y02E 60/50; Y02P 70/50

(86) International application number:
**PCT/JP2022/005319**

(87) International publication number:
**WO 2022/172983 (18.08.2022 Gazette 2022/33)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.02.2021  JP 2021020236**

(71) Applicant: **DAI NIPPON PRINTING CO., LTD.**
**Tokyo 162-8001 (JP)**

(72) Inventors:
• **KODANI, Kazufumi**
  **Tokyo 162-8001 (JP)**

• **KAGATA, Tsubasa**
  **Tokyo 162-8001 (JP)**
• **TAKAHAGI, Atsuko**
  **Tokyo 162-8001 (JP)**
• **YAMAZAKI, Masayasu**
  **Tokyo 162-8001 (JP)**
• **KIYOHARA, Yoshiko**
  **Tokyo 162-8001 (JP)**
• **NAKAMURA, Takashi**
  **Tokyo 162-8001 (JP)**
• **TABUCHI, Naoto**
  **Tokyo 162-8001 (JP)**

(74) Representative: **Müller-Boré & Partner**
**Patentanwälte PartG mbB**
**Friedenheimer Brücke 21**
**80639 München (DE)**

(54)  **GASKET MEMBER FOR SOLID POLYMER FUEL CELL, ELECTRODE-ELECTROLYTE MEMBRANE LAMINATE WITH GASKET MEMBER, AND SOLID POLYMER FUEL CELL**

(57)     Provided is a gasket member for a solid polymer fuel cell, said gasket member comprising at least a laminate provided with a base material layer, and an adhesion layer positioned on both sides of the base material layer, wherein the laminate has a percentage retention of elongation at break of at least 60% after being left for 300 hours in 120°C water.

EP 4 293 764 A1

**Description**

TECHNICAL FIELD

The present disclosure relates to a gasket member for a solid polymer fuel cell, a gasket member-attached electrode-electrolyte membrane laminate, and a solid polymer fuel cell.

BACKGROUND ART

Fuel cells are cells that include an electrolyte and an electrode disposed on both surfaces thereof and that generate power by an electrochemical reaction between hydrogen and oxygen, and generate only water during the power generation. Since the fuel cells thus do not generate an environmental-burden gas such as carbon dioxide unlike conventional internal-combustion engines, they are expected to be widely used as next-generation clean energy systems. Among the fuel cells, particularly a solid polymer fuel cell has a relatively low operating temperature and low electrolyte resistance and can in addition obtain high output due to the use of a highly active catalyst even when being small, and are therefore expected to be in practical use soon as a domestic cogeneration system and the like.

For the production of this solid polymer fuel cell, first, a solid polymer electrolyte membrane having proton conductivity is prepared, an anode catalyst layer is formed on one surface of this electrolyte membrane and a cathode catalyst layer is formed on the other surface to produce a catalyst layer-electrolyte membrane laminate, and further a gas diffusion layer is formed on the catalyst layers to produce an electrode-electrolyte membrane laminate. Then, on this electrode-electrolyte membrane laminate, a gasket and a separator are placed to complete a solid polymer fuel cell (see, for example, Patent Document 1).

PRIOR ART DOCUMENT

PATENT DOCUMENT

Patent Document 1: Japanese Patent Laid-open Publication No. 2013-218876

SUMMARY OF THE INVENTION

PROBLEMS TO BE SOLVED BY THE INVENTION

Since a fuel cell is operated in a high-humidity atmosphere to improve the proton conductivity of the electrolyte membrane and further generates water by a power-generation reaction, the members constituting the fuel cell are required to have high hydrolysis resistance. In addition, since the output density of the fuel cell can be improved by increasing the operating temperature thereof, the fuel cell is required to tolerate the use in a high-temperature environment (for example, 100°C or more) from the viewpoint of reducing the size of the fuel cell.

A gasket member among the members constituting the fuel cell, however, does not always have sufficient hydrolysis resistance in a high-temperature environment. When the fuel cell is used in a high-temperature environment but the gasket member does not have sufficient hydrolysis resistance in a high-temperature environment, a problem may possibly occur in which the gasket member is hydrolyzed and a fuel is leaked.

Under these circumstances, a main object of the present disclosure is to provide a gasket member for a solid polymer fuel cell, the gasket member having excellent hydrolysis resistance in a high-temperature environment.

MEANS FOR SOLVING THE PROBLEM

The inventors of the present disclosure have extensively conducted studies for solving the above-described problems. As a result of the studies, it has been found that a laminate including a laminate that includes a base material layer and an adhesive layer disposed on both sides of the base material layer, and that has a retention of elongation at break of 60% or more after left in 120°C water for 300 hours has excellent hydrolysis resistance in a high-temperature environment and can suitably be used as a gasket member for a solid polymer fuel cell.

The present disclosure has been completed by further conducting studies on the basis of the above-mentioned new findings. That is, the present disclosure provides an invention of an aspect as described below.

A gasket member for a solid polymer fuel cell, the gasket member including a laminate that includes a base material layer and an adhesive layer disposed on both sides of the base material layer, the laminate having a retention of elongation at break of 60% or more after left in 120°C water for 300 hours.

ADVANTAGES OF THE INVENTION

The present disclosure can provide a gasket member for a solid polymer fuel cell, the gasket member having excellent hydrolysis resistance in a high-temperature environment. The present disclosure can also provide a gasket member-attached electrode-electrolyte membrane laminate including the gasket member, and a solid polymer fuel cell.

BRIEF DESCRIPTION OF THE DRAWINGS

Fig. 1 shows a schematic view of one cross-sectional structure of a gasket member, according to the present disclosure, for a solid polymer fuel cell.
Fig. 2 shows a schematic view of one cross-sectional structure of the gasket member, according to the present disclosure, for a solid polymer fuel cell.
Fig. 3 is one schematic plan view of the gasket member, according to the present disclosure, for a solid polymer fuel cell.
Fig. 4 is a schematic view of one cross-sectional structure of a gasket member-attached electrode-electrolyte membrane laminate according to the present disclosure.
Fig. 5 is one schematic plan view of the gasket member-attached electrode-electrolyte membrane laminate according to the present disclosure.
Fig. 6 is a schematic view of one cross-sectional structure of a solid polymer fuel cell according to the present disclosure.
Fig. 7 is a schematic view of one cross-sectional structure of the solid polymer fuel cell according to the present disclosure.

EMBODIMENTS OF THE INVENTION

A gasket member, according to the present disclosure, for a solid polymer fuel cell is characterized by including a laminate that includes at least a base material layer and an adhesive layer disposed on both sides of the base material layer, the laminate having a retention of elongation at break of 60% or more after left in 120°C water for 300 hours. The gasket member, according to the present disclosure, for a solid polymer fuel cell has excellent hydrolysis resistance in a high-temperature environment.
The gasket member, according to the present disclosure, for a solid polymer fuel cell is, as described later, a gasket member to be disposed between an electrolyte membrane and a separator of a solid polymer fuel cell, and is applicable to a wide range of solid polymer fuel cells.
Hereinafter, the gasket member, according to the present disclosure, for a solid polymer fuel cell is described in detail. In this specification, a numerical range indicated by the term "A to B" means "A or more" and "B or less". For example, the expression of "2 to 15 mm" means 2 mm or more and 15 mm or less.

1. Laminated structure and physical properties of gasket member for solid polymer fuel cell

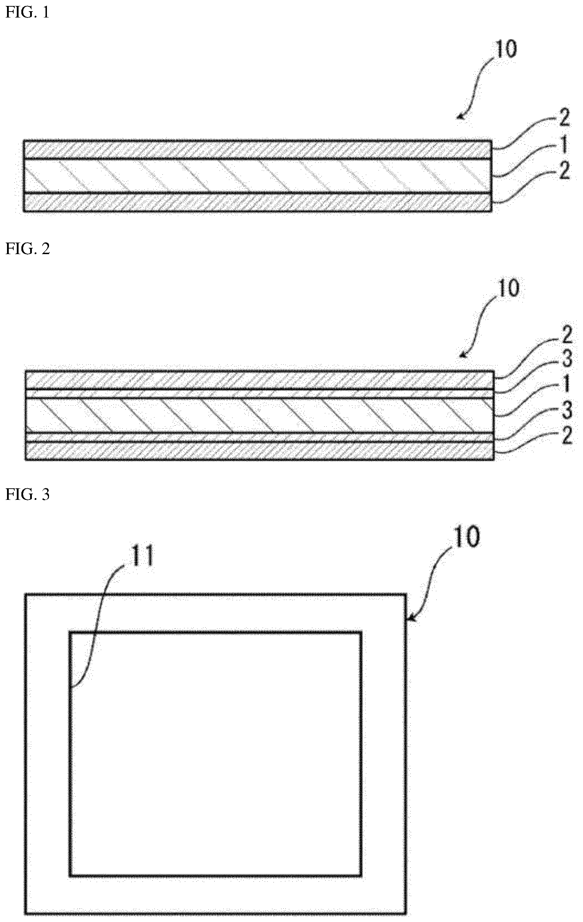

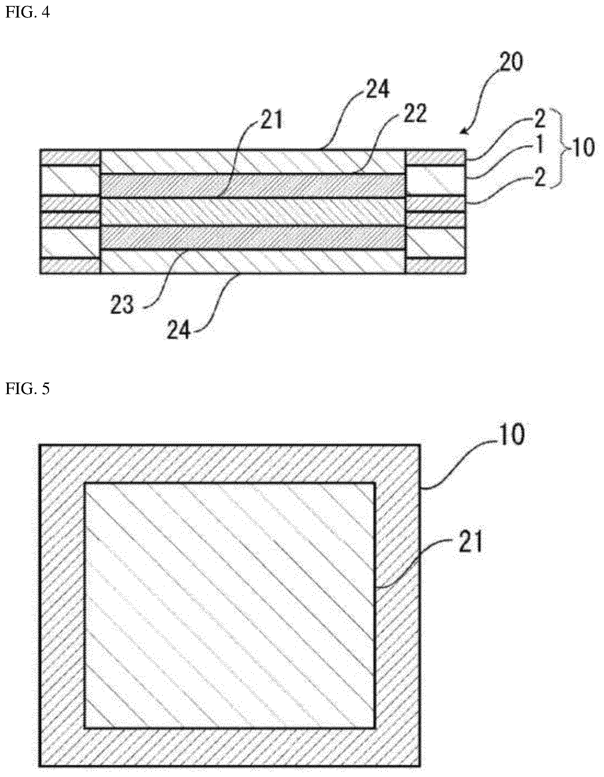

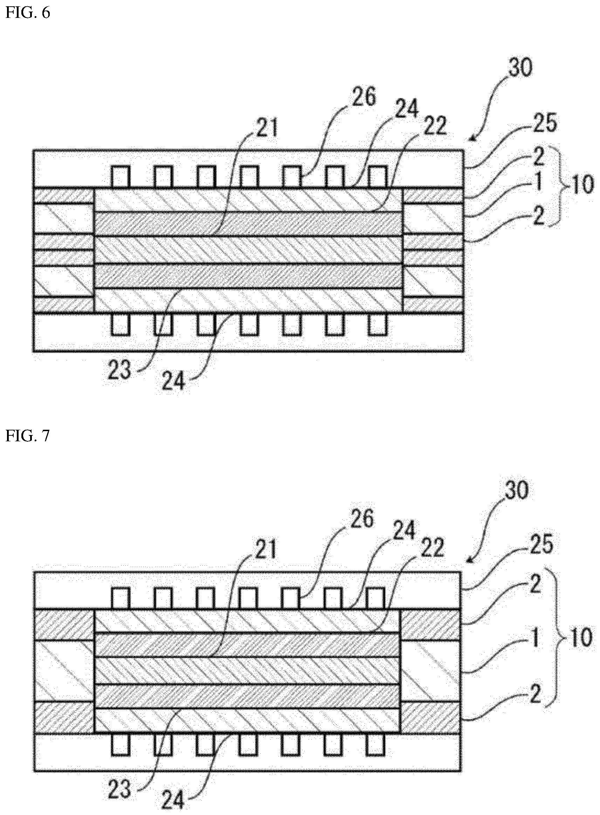

A gasket member 10, according to the present disclosure, for a solid polymer fuel cell (hereinafter, sometimes expressed as a gasket member 10) includes, as shown in, for example, Fig. 1, a laminate that includes at least a base material layer 1 and an adhesive layer 2 disposed on both sides of the base material layer 1. That is, the gasket member 10 includes a laminate that includes at least the adhesive layer 2, the base material layer 1, and the adhesive layer 2 layered in this order. The adhesive layer 2 on both sides in the gasket member 10 constitutes the outermost layer of the gasket member 10, and the adhesive layer 2 on one side is disposed on the side of an electrolyte membrane 21 and the adhesive layer 2 on the other side is disposed on the side of a separator 25 (see Fig. 6).
As described layer, the gasket member 10 is, for example, disposed to surround the periphery of an electrode-electrolyte membrane laminate (see schematic views of a gasket member-attached electrode-electrolyte membrane laminate in Figs. 4 and 5). Accordingly, this gasket member 10 includes an aperture 11 for inserting catalyst layers 22, 23 and a gas diffusion layer 24 (see Fig. 3).
As shown in, for example, Fig. 2, the gasket member 10 may also include an anchor coat layer 3 on at least one of surfaces of the base material layer 1. For example, when the base material layer 1 is formed of a film, the disposition of the anchor coat layer 3 between the base material layer 1 and the adhesive layer 2 can increase adhesiveness between the base material layer 1 and the adhesive layer 2. The gasket member 10 preferably includes the anchor coat layer 3 on both surfaces of the base material layer 1. That is, the gasket member 10 more preferably includes a laminate that includes at least the adhesive layer 2, the anchor coat layer 3, the base material layer 1, the anchor coat layer 3, and the adhesive layer 2 layered in this order.

The thickness (total thickness) of the laminate included in the gasket member 10 is adjusted according to the size and the like of the solid polymer fuel cell and is not particularly limited, and examples thereof include about 300 $\mu$m or less, about 200 $\mu$m or less, about 100 $\mu$m or less, and about 50 $\mu$m or less; and about 30 $\mu$m or more, about 100 $\mu$m or more, about 200 $\mu$m or more, and about 250 $\mu$m or more. Preferable ranges of the thickness (total thickness) of the laminate included in the gasket member 10 include about 30 to 300 $\mu$m, about 30 to 200 $\mu$m, about 30 to 100 $\mu$m, about 30 to 50 $\mu$m, about 100 to 300 $\mu$m, about 100 to 200 $\mu$m, about 200 to 300 $\mu$m, and about 250 to 300 $\mu$m.

As shown in, for example, Fig. 7, when one gasket member 10 is placed to surround the periphery of an electrode-electrolyte membrane laminate, the thickness (total thickness) of the laminate included in the gasket member 10 is preferably about 400 $\mu$m or less, more preferably about 300 $\mu$m or less, and preferably about 30 $\mu$m or more, more preferably about 50 $\mu$m or more, still more preferably more than 50 $\mu$m, still more preferably about 100 $\mu$m or more, and preferable ranges thereof include about 30 to 400 $\mu$m, about 30 to 30 $\mu$m, about 50 to 400 $\mu$m, about 50 to 300 $\mu$m, about more than 50 $\mu$m and 400 $\mu$m or less, about more than 50 $\mu$m and 300 $\mu$m or less, about 100 to 400 $\mu$m, and about 100 to 300 $\mu$m. In this case, the thickness of the base material layer 1 is preferably about 300 $\mu$m or less, more preferably about 200 $\mu$m or less, and preferably about 20 $\mu$m or more, more preferably about 30 $\mu$m or more, still more preferably 50 $\mu$m or more, and preferable ranges thereof include about 20 to 300 $\mu$m, about 20 to 200 $\mu$m, about 30 to 300 $\mu$m, about 30 to 200 $\mu$m, about 50 to 300 $\mu$m, and about 50 to 200 $\mu$m. The thickness of the adhesive layer 2 is preferably about 200 $\mu$m or less, more preferably about 100 $\mu$m or less, and preferably about 10 $\mu$m or more, more preferably about 30 $\mu$m or more, and preferable ranges thereof include about 10 to 200 $\mu$m, about 10 to 100 $\mu$m, about 30 to 200 $\mu$m, and about 30 to 100 $\mu$m.

As shown in, for example, Fig. 6, when two gasket members 10 are placed to surround the periphery of an electrode-electrolyte membrane laminate, the thickness (total thickness) of the laminate included in each of the gasket members 10 is preferably about 200 $\mu$m or less, more preferably about 150 $\mu$m or less, and preferably about 25 $\mu$m or more, more preferably about 50 $\mu$m or more, and preferable ranges thereof include about 25 to 200 $\mu$m, about 25 to 150 $\mu$m, about 50 to 200 $\mu$m, and about 50 to 150 $\mu$m. In this case, the thickness of the base material layer 1 is preferably about 200 $\mu$m or less, more preferably about 150 $\mu$m or less, and preferably about 10 $\mu$m or more, more preferably about 15 $\mu$m or more, and preferable ranges thereof include about 10 to 200 $\mu$m, about 10 to 150 $\mu$m, about 15 to 200 $\mu$m, and about 15 to 150 $\mu$m. The thickness of the adhesive layer 2 is preferably about 100 $\mu$m or less, more preferably about 50 $\mu$m or less, and preferably about 3 $\mu$m or more, more preferably about 15 $\mu$m or more, and preferable ranges thereof include about 3 to 100 $\mu$m, about 3 to 50 $\mu$m, about 15 to 100 $\mu$m, and about 15 to 50 $\mu$m.

In the present disclosure, it is selected as appropriate according to the specification and the like of a solid polymer fuel cell 30 whether one gasket member 10 or two gasket members 10 are used. The total thickness of the gasket member 10 and the thickness of the layers may also be selected as appropriate according to the thickness and the like of the solid polymer fuel cell 30.

In the gasket member 10, the proportion of the total thickness of the base material layer 1, the adhesive layer 2, and the anchor coat layer 3 disposed as necessary to the thickness (total thickness) of the laminate included in the gasket member 10 is preferably 90% or more, more preferably 95% or more, still more preferably 98% or more, further 100%. As a specific example, when the gasket member 10 according to the present disclosure includes the base material layer 1 and the adhesive layer 2, the proportion of the total thickness of these layers to the thickness (total thickness) of the laminate included in the gasket member 10 is preferably 90% or more, more preferably 95% or more, still more preferably 98% or more. When the gasket member 10 according to the present disclosure is a laminate that includes the base material layer 1, the adhesive layer 2, and the anchor coat layer 3, the proportion of the total thickness of these layers to the thickness (total thickness) of the laminate included in the gasket member 10 is, for example, 80% or more, preferably 90% or more, more preferably 95% or more, still more preferably 98% or more, further 100%.

The laminate included in the gasket member 10 according to the present disclosure has a retention of elongation at break of 60% or more after left in 120°C water for 300 hours. Due to this property, the gasket member 10 exhibits properties of excellent hydrolysis resistance in a high-temperature environment. The method for measuring the retention of elongation at break of the gasket member 10 is as follows.

<Method for measuring retention of elongation at break>

The retention of elongation at break is measured by the following method. Specifically, a sample was measured for elongation at break after immersed in 120°C water and left for 300 hours, and the obtained measured value was divided by the elongation at break before the endurance test (initial elongation at break) to obtain a retention of elongation at break. The elongation at break was measured by cutting a film into a 15-mm wide (TD) 50-mm long (MD) rectangle, and measuring the elongation of the rectangular film to its break by pulling it using a tensile tester under the conditions of a tensile speed of 200 mm/min and a gauge length of 20 mm. The test environment is 23°C and the average value of three measurements was used.

$$\text{Retention of elongation at break (\%) = elongation at break after endurance}$$

$$\text{test/elongation at break before endurance test (initial elongation at break)} \times 100$$

As a method for identifying the MD of the gasket member, there is a method for confirming, through observation with an electron microscope, a sea-island structure of a cross-section (for example, a cross-section of a first adhesive layer, a base material, or a second adhesive layer) of the gasket member. In the method, the MD can be determined as the direction parallel to a cross-section in which the average of the diameters of island shapes in the direction perpendicular to the thickness direction of the gasket member is maximum. Specifically, the sea-island structure is confirmed by observing electron micrographs of a cross-section in the length direction of the gasket member and cross-sections (total 10 cross-sections) at angular intervals of 10 degrees from the direction parallel to the cross-section in the length direction to the direction perpendicular to the cross-section in the length direction. Next, in each cross-section, the shape of each island is observed. In the shape of each island, the linear distance connecting the leftmost end in the perpendicular direction to the thickness direction of the gasket member to the rightmost end in the perpendicular direction is defined as a diameter y. In each cross-section, the average of the top 20 diameters y in descending order of the diameter y of the island shape is calculated. The direction parallel to a cross-section having the largest average of the diameters y of the island shapes is determined as MD.

From the viewpoint of exhibition of properties of more excellent hydrolysis resistance in a high-temperature environment, the laminate included in the gasket member 10 has a retention of elongation at break of 60% or more, preferably 65% or more, more preferably 70% or more, still more preferably 75% or more, still more preferably 80% or more, particularly preferably 85% or more.

As an effective method for increasing the retention of elongation at break of the laminate included in the gasket member 10 to 60% or more, there are, for example, a method for using a resin or metal described later as a material for forming the base material layer 1, and a method for using, among these materials, a resin having a high glass-transition temperature (Tg), or the like. In combination with this method, it is effective to use a polyolefin-based resin (particularly, an acid-modified polyolefin) for the adhesive layer 2 or to dispose the anchor coat layer 3. That is, an effective method includes using a heat-resistant resin as the base material layer 1, and using an acid-modified polyolefin for the adhesive layer 2 or disposing the anchor coat layer 3 to increase adhesiveness to the heat-resistant resin.

From the viewpoint of exhibition of properties of more excellent hydrolysis resistance in a high-temperature environment, the laminate included in the gasket member 10 has, when left in an environment at a temperature of 150°C for 30 minutes, a hot-shrinkage rate of preferably 30% or less, more preferably 20% or less, still more preferably 10% or less. From the same viewpoint, the laminate included in the gasket member 10 has, when left in an environment at a temperature of 180°C for 30 minutes, a hot-shrinkage rate of preferably 30% or less, more preferably 20% or less, still more preferably 10% or less, still more preferably 3% or less, still more preferably 1% or less, still more preferably 0.5% or less. The method for measuring the hot-shrinkage rate of the gasket member 10 is as follows.

<Method for measuring hot-shrinkage rate at 150°C or 180°C>

The hot-shrinkage rate is obtained by heating a test piece, which is obtained by cutting a gasket member into a size of 10 cm length (MD) × 10 cm width (TD), in an oven at 150°C or 180°C for 30 minutes, obtaining a size change ratio between before and after the heating of the test piece in the length direction and the width direction (two directions perpendicular to each other) on the basis of the following equation (I), and calculating, as average values, the absolute values of the size change ratios in the two directions.

$$\text{Hot-shrinkage rate (\%)} = \{(X - Y)/X\} \times 100 \text{ (I)}$$

[X: size before heat treatment in oven, Y: size after heat treatment in oven]

2. Layers forming gasket member for solid polymer fuel cell

[Base material layer 1]

In the present disclosure, the base material layer 1 is a layer disposed for the purpose of, for example, making it exhibit a function as a base material of the gasket member 10. The base material layer 1 is positioned between two adhesive layers 2.

The base material layer 1 is preferably made from a material having excellent hydrolysis resistance, and preferably contains polysulfone, polyether sulfone, polyphenylsulfone, polyarylate, a polyolefin, a polyamide, a polyimide, polyether ether ketone, polymethyltenpene, polyphenylene oxide, polyphenylene sulfide, a fluororesin, a metal, or the like. When these materials are used to form the base material layer 1, one or two or more thereof may be contained in the base material layer 1.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. The polyolefin-based resin may be an acid-modified polyolefin. When containing a polyolefin, the base material layer 1 may contain only one polyolefin or two or more polyolefins.

The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof. Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene. When containing an acid-modified polyolefin, the base material layer 1 may contain only one acid-modified polyolefin or two or more acid-modified polyolefins.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. When containing a polyamide, the base material layer 1 may contain only one polyamide or two or more polyamides.

The polyamide is particularly preferably one having an α crystal, and specific examples thereof include aliphatic polyamides such as nylon 6, nylon 66, nylon 46, and a copolymer of nylon 6 and nylon 66.

Examples of the metal include an aluminum alloy, copper, zinc, titanium, and stainless steel.

In the present disclosure, from the viewpoint of suitably increasing the hydrolysis resistance of the gasket member 10 in a high-temperature environment, the base material layer 1 preferably contains polysulfone, polyether sulfone, polyphenylsulfone, polyarylate, or a polyolefin, more preferably contains polyether sulfone, polyphenylsulfone, or polyarylate, and still more preferably contains polyphenylsulfone. The base material layer 1 is preferably made from at least one resin among these resins, and is particularly preferably made from polyphenylsulfone.

In the present disclosure, from the viewpoint of suitably increasing the hydrolysis resistance of the gasket member 10 in a high-temperature environment, the base material layer 1 is preferably made from a resin having excellent heat resistance, and the resin forming the base material layer 1 has a glass-transition temperature (Tg) of preferably about 160°C or more, more preferably about 180°C or more, still more preferably about 200°C or more. The upper limit of the glass-transition temperature (Tg) is, for example, about 450°C or less. The glass-transition temperature (Tg) means a displacement point of a baseline in a DSC curve measured by a differential scanning calorimeter (DSC).

The form of the base material layer 1 may be a film or a nonwoven fabric. When the base material layer 1 is in the form of, for example, a film, the base material layer 1 can suitably be formed of a film of the resin or metal described above. When the base material layer 1 is in the form of, for example, a nonwoven fabric, the base material layer 1 can suitably be formed of a nonwoven fabric of the resin or metal described above. When the base material layer 1 is in the form of a nonwoven fabric, the adhesive layer 2 can be impregnated into gaps in the base material layer 1 that is a nonwoven fabric and physical adhesiveness between the base material layer 1 and the adhesive layer 2 can therefore be increased. Accordingly, when the base material layer 1 is in the form of a nonwoven fabric, the adhesiveness between the base material layer 1 and the adhesive layer 2 can sufficiently be increased without disposition of the anchor coat layer 3 described layer, even though the anchor coat layer 3 may still be disposed on a surface of the base material layer 1. On the other hand, when the base material layer 1 is in the form of a film, the anchor coat layer 3 is preferably disposed on a surface of the base material layer 1 from the viewpoint of increasing the adhesiveness between the base material layer 1 and the adhesive layer 2.

The base material layer 1 may be a single layer, or may include two or more layers. When the base material layer 1 includes two or more layers, the layer-forming material and the thickness may be identical or different between the layers.

At least on a surface of the base material layer 1 or inside the base material layer 1, additives may be present such as a filler, a flame retardant, an antiblocking agent, an antioxidant, a light stabilizer, a tackifier, and an antistatic agent. Specific examples of the additives include particles of metal oxides such as alumina, silica, and titania. The additives may be used alone, or may be used in combination of two or more thereof.

In the present disclosure, the thickness of the base material layer 1 is adjusted as appropriate according to the size and the like of the solid polymer fuel cell. From the viewpoint of suitably increasing the hydrolysis resistance of the gasket member 10 in a high-temperature environment, the thickness of the base material layer 1 is preferably about 20 $\mu$m or more, more preferably about 40 $\mu$m or more, still more preferably about 50 $\mu$m or more, still more preferably 100 $\mu$m or more, and preferably about 200 $\mu$m or less, more preferably about 150 $\mu$m or less, still more preferably about 100 $\mu$m or less. Preferable ranges of the thickness of the base material layer 1 include about 20 to 200 $\mu$m, about 20 to 150 $\mu$m, about 20 to 100 $\mu$m, about 40 to 200 $\mu$m, about 40 to 150 $\mu$m, about 40 to 100 $\mu$m, about 100 to 200 $\mu$m, and about 100 to 150 $\mu$m.

When the base material layer 1 is in the form of a nonwoven fabric, the basis weight of the base material layer 1 is adjusted as appropriate according to the size and the like of the solid polymer fuel cell. From the viewpoint of suitably increasing the hydrolysis resistance of the gasket member 10 in a high-temperature environment, the basis weight of the base material layer 1 is preferably about 5 g/m$^2$ or more, more preferably about 10 g/m$^2$ or more, still more preferably about 15 g/m$^2$ or more, and preferably about 50 g/m$^2$ or less, more preferably about 40 g/m$^2$ or less, still more preferably about 30 g/m$^2$ or less. When the base material layer 1 is in the form of a nonwoven fabric, preferable ranges of the basis weight of the base material layer 1 include about 5 to 50 g/m$^2$, about 5 to 40 g/m$^2$, about 5 to 30 g/m$^2$, about 10 to 50 g/m$^2$, about 10 to 40 g/m$^2$, about 10 to 30 g/m$^2$, about 15 to 50 g/m$^2$, about 15 to 40 g/m$^2$, and about 15 to 30 g/m$^2$.

[Adhesive layer 2]

In the gasket member 10, the adhesive layer 2 is disposed on both sides of the base material layer 1. The adhesive layer 2 on both sides in the gasket member 10 constitutes the outermost layer of the gasket member 10, and the adhesive layer 2 on one side is disposed on the side of the electrolyte membrane 21 and the adhesive layer 2 on the other side is disposed on the side of the separator 25 (see Fig. 6). The adhesive layer 2 disposed on the side of the electrolyte membrane 21 and the adhesive layer 2 disposed on the side of the separator 25 may be identical or different in material, thickness, and the like. At least on a surface of the adhesive layer 2 or inside the adhesive layer 2, additives may be present such as a filler, a flame retardant, an antiblocking agent, an antioxidant, a light stabilizer, a tackifier, and an antistatic agent. Specific examples of the additives include particles of metal oxides such as alumina, silica, and titania. The additives may be used alone, or may be used in combination of two or more thereof.

The adhesive layer 2 is preferably made from a resin having excellent adhesiveness to the separator 25 and the electrolyte membrane 21. Examples of the resin used for the making of the adhesive layer 2 include a polyolefin-based resin, a tackiness agent (such as an acrylic resin and an aliphatic polyamide), and a thermosetting resin (such as an epoxy resin and a phenolic resin). Only one resin or two or more resins may be contained in the adhesive layer 2.

Examples of the polyolefin-based resin include the same materials as listed for the base material layer 1. Among these materials, the adhesive layer 2 preferably contains at least one of an acid-modified polyolefin, an imine-modified polyolefin, or a carbodiimide-modified polyolefin, and is still more preferably made from an acid-modified polyolefin, to have excellent adhesiveness to the separator 25 made from a metal. Among acid-modified polyolefins, acid-modified polypropylene is preferable. In the present disclosure, the use of an acid-modified polyolefin can, together with the base material layer 1, suitably increase the hydrolysis resistance of the gasket member 10 in a high-temperature environment.

The adhesive layer 2 may be a single layer, or may include two or more layers. When the adhesive layer 2 includes two or more layers, the layer-forming material and the thickness may be identical or different between the layers. Also when the adhesive layer 2 includes two or more layers, the layers positioned as the outermost layers of the gasket member 10 preferably contain an acid-modified polyolefin, and are still more preferably made from an acid-modified polyolefin, to have excellent adhesiveness to the separator 25 made from a metal.

The thickness of the adhesive layers 2 is adjusted as appropriate according to the size and the like of the solid polymer fuel cell. From the viewpoint of suitably increasing the hydrolysis resistance of the gasket member 10 in a high-temperature environment, the thickness of the adhesive layers 2 is preferably about 10 $\mu$m or more, more preferably about 15 $\mu$m or more, still more preferably about 20 $\mu$m or more, and preferably about 100 $\mu$m or less, more preferably about 80 $\mu$m or less, still more preferably about 60 $\mu$m or less. Preferable ranges of the thickness of the adhesive layers 2 include about 10 to 100 $\mu$m, about 10 to 80 $\mu$m, about 10 to 60 $\mu$m, about 15 to 100 $\mu$m, about 15 to 80 $\mu$m, about 15 to 60 $\mu$m, about 20 to 100 $\mu$m, about 20 to 80 $\mu$m, and about 20 to 60 $\mu$m.

The laminate of the base material layer 1 and the adhesive layer 2 disposed on both sides thereof can be produced, for example, by extruding a resin for forming the adhesive layer 2 to both sides of the base material layer 1 prepared in advance, and can also be produced by extruding simultaneously a resin for forming the base material layer 1 and a resin for forming the adhesive layer 2. Alternatively, the laminate can be produced by extruding the base material layer 1 into between the adhesive layers 2 prepared in advance. The method for extruding and layering a resin is not particularly limited, and a known method is applicable such as an extrusion lamination method, a T-die method, an inflation method, and a thermal lamination method. When the anchor coat layer 3 described later is disposed, the adhesive layer may be layered on a resin or the like for forming the anchor coat layer 3, the resin and the like having been applied to at least one of surfaces of the base material layer 1.

[Anchor coat layer 3]

The anchor coat layer 3 is a layer disposed as necessary on at least one of surfaces of the base material layer 1 for the purpose of increasing adhesiveness between the base material layer 1 and the adhesive layer 2. The anchor coat layer 3 is preferably disposed on both sides of the base material layer 1.

The base material layer 1 is, as described above, preferably made from a resin having excellent heat resistance, but excellent heat-resistant resins generally have a property of low adhesiveness to a resin. Accordingly, when a high heat-resistant resin film having a glass-transition temperature (Tg) of, for example, about 160°C or more is used as the base material layer 1, disposition of the anchor coat layer 3 is effective from the viewpoint of increasing the adhesiveness between the base material layer 1 and the adhesive layer 2.

The material for forming the anchor coat layer 3 is not particularly limited as long as it increases the adhesiveness between the base material layer 1 and the adhesive layer 2, but preferable examples thereof include an isocyanate-based, polyethyleneimine-based, polyester-based, polyurethane-based, polyvinylbutyral-based, acrylic, aminoethylated acrylic polymer-based, styrene/maleic acid copolymer-based, rubber-based, or epoxy-based resin. These reins can be used alone, or in combination of two or more thereof.

The compound having an isocyanate group is not particularly limited, but preferable examples thereof include a polyfunctional isocyanate compound from the viewpoint of effectively increasing the adhesiveness between the base material layer 1 and the adhesive layer 2. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), m-xylylene diisocyanate (XDI), polymerized or nurated products thereof, mixtures thereof, and copolymers thereof with another polymer. Examples thereof include adduct forms, biuret forms, and isocyanurate forms. Examples thereof also include triisocyanates such as triphenylmethane-4,4',4"-triisocyanate and tris(p-isocyanatephenyl)thiophosphate. One compound or two or more compounds having an isocyanate group may be used to form the anchor coat layer 3.

Examples of the polyurethane-based resin include a two-component mixture of a polyester resin and a polyfunctional isocyanate compound, and a two-component mixture of a polycarbonate diol and a polyfunctional isocyanate compound. Specific examples of the polyurethane-based resin include a two-component mixture of a polyester resin and hexamethylene diisocyanate, and a two-component mixture of polycarbonate diol and polymethylene polyphenyl polyisocyanate.

The thickness of the anchor coat layers 3 is adjusted as appropriate according to the size and the like of the solid polymer fuel cell. From the viewpoint of suitably increasing the hydrolysis resistance of the gasket member 10 in a high-temperature environment, the thickness of the anchor coat layers 3 is preferably about $0.02 \text{ g/m}^2$ or more, more preferably $0.05 \text{ g/m}^2$ or more, still more preferably about $0.1 \text{ g/m}^2$ or more, still more preferably about $0.3 \text{ g/m}^2$ or more, still more preferably about $0.5 \text{ g/m}^2$ or more, and preferably about $5 \text{ g/m}^2$ or less, more preferably about $4 \text{ g/m}^2$ or less, still more preferably about $3 \text{ g/m}^2$ or less. Preferable ranges of the thickness of the anchor coat layers 3 include about $0.02$ to $5 \text{ g/m}^2$, about $0.02$ to $4 \text{ g/m}^2$, about $0.02$ to $3 \text{ g/m}^2$, about $0.05$ to $5 \text{ g/m}^2$, about $0.05$ to $4 \text{ g/m}^2$, about $0.05$ to $3 \text{ g/m}^2$, about $0.1$ to $5 \text{ g/m}^2$, about $0.1$ to $4 \text{ g/m}^2$, about $0.1$ to $3 \text{ g/m}^2$, about $0.3$ to $5 \text{ g/m}^2$, about $0.3$ to $4 \text{ g/m}^2$, about $0.3$ to $3 \text{ g/m}^2$, about $0.5$ to $5 \text{ g/m}^2$, about $0.5$ to $4 \text{ g/m}^2$, and about $0.5$ to $3 \text{ g/m}^2$.

3. Gasket member-attached electrode-electrolyte membrane laminate

A gasket member-attached electrode-electrolyte membrane laminate 20 according to the present disclosure is an electrode-electrolyte membrane laminate to which the gasket member 10 according to the present disclosure is attached (see Fig. 4). The gasket member-attached electrode-electrolyte membrane laminate 20 according to the present disclosure is characterized by specifically including: an electrode-electrolyte membrane laminate obtained by disposing a catalyst layer 22, 23 and a gas diffusion layer 24 on both surfaces of an electrolyte membrane 21; and a gasket member 10 disposed to cover an outer periphery of the electrode-electrolyte membrane laminate and having a frame shape, the gasket member 10 including a laminate that includes at least a base material layer 1 and an adhesive layer 2 disposed on both sides of the base material layer 1, and the laminate having a retention of elongation at break of 60% or more after left in 120°C water for 300 hours.

The gasket member 10 according to the present disclosure may, as shown in, for example, Fig. 4, be a pair of members one of which is disposed to cover one side of the outer periphery of the electrode-electrolyte membrane laminate and the other of which to cover the other side, and which are bonded to each other. The gasket member 10 may, as shown in Fig. 7, be one member to cover the outer periphery of the electrode-electrolyte membrane laminate.

The electrolyte membrane 21 is not particularly limited, and may be, for example, one used in a known solid polymer fuel cell. The electrolyte membrane 21 is formed, for example, by coating the surface of a base material with a solution containing a hydrogen ion conductive polymer electrolyte, and drying the solution. Examples of the hydrogen ion conductive polymer electrolyte include a perfluorosulfonic acid-based fluorine ion-exchange resin. More specific examples thereof include a perfluorocarbonsulfonic acid-based polymer (PFS-based polymer) obtained by substituting a C-H bond of a hydrocarbon-based ion-exchange membrane with fluorine. By introducing a fluorine atom having high electronegativity, the electrolyte becomes very chemically stable and has high degree of dissociation of a sulfonic acid group, and can realize high ion conductivity. Specific examples of such a hydrogen ion conductive polymer electrolyte include "Nafion" (registered trade name) manufactured by DuPont de Nemours, Inc., "Flemion" (registered trade name) manufactured by Asahi Glass Co., Ltd., "Aciplex" (registered trade name) manufactured by Asahi Kasei Corp., and "GoreSelect" (registered trade name) manufactured by Gore & Associates, Inc. The concentration of the hydrogen ion conductive polymer electrolyte contained in the hydrogen ion conductive polymer electrolyte-containing solution is usually about 5 to 60% by weight, preferably about 20 to 40% by weight. The thickness of the electrolyte membrane 21 is usually about 3 to 50 $\mu$m, preferably about 5 to 20 $\mu$m. Although not shown in the drawings, the end surface of the electrolyte membrane 21 need not be aligned with the end surfaces of the catalyst layers 22, 23, but may, for example, be protruded further than the end surfaces of the catalyst layers 22, 23, with the protrusion of the electrolyte membrane 21 covered with the adhesive layer 2 of the gasket member 10.

Specifically, one of the catalyst layers 22, 23 is an anode catalyst layer and the other is a cathode catalyst layer. The catalyst layers 22, 23 are not particularly limited, and may be, for example, those used in a known solid polymer fuel cell. The catalyst layers 22, 23 are, for example, platinum-containing catalyst layers. The catalyst layers 22, 23 contains, for example, carbon particles carrying catalyst particles, and a hydrogen ion conductive polymer electrolyte. Examples of the catalyst particles include platinum and a platinum compound. Examples of the platinum compound include an alloy of platinum with at least one metal selected from the group consisting of ruthenium, palladium, nickel, molybdenum, iridium, iron, and the like. Usually, the catalyst particles contained in the cathode catalyst layer are platinum and the catalyst particles contained in the anode catalyst layer are an alloy of the above-mentioned metal and platinum. For the hydrogen ion conductive polymer electrolyte, the same material as used for the electrolyte membrane 21 can be used.

The size and the shape of the electrolyte membrane 21 and the catalyst layers 22,23 are adjusted according to the size of the solid polymer fuel cell, and the size and the shape of the gasket member 10 according to the present disclosure are adjusted as appropriate according to the size of these members while the functions as a gasket member (that is, being mechanically strong enough to endure heat pressing and exhibiting gas barrier properties not to externally leak a fuel and an oxidant) are secured.

4. Solid polymer fuel cell

A solid polymer fuel cell 30 according to the present disclosure is a solid polymer fuel cell including the gasket member 10 according to the present disclosure. That is, the solid polymer fuel cell 30 according to the present disclosure includes the gasket member-attached electrode-electrolyte membrane laminate 20 according to the present disclosure.

The solid polymer fuel cell 30 includes a catalyst layer-electrolyte membrane laminate, and a gas diffusion layer 24 is formed on catalyst layers 22, 23 of the catalyst layer-electrolyte membrane laminate and an electrode-electrolyte membrane laminate is thus constituted. Each of the catalyst layers 22, 23 and the gas diffusion layer 24 constitute electrodes (an anode electrode and a cathode electrode). The gasket member 10 according to the present disclosure is placed on the outer periphery of the electrolyte membrane 21 to cover these electrodes. Further, separators 25 having a gas flow path 26 formed thereon are placed to vertically sandwich the electrode-electrolyte membrane laminate having the gasket member 10 placed thereon.

The gas diffusion layer 24 is not particularly limited, and may be, for example, one used in a known solid polymer fuel cell. That is, as the gas diffusion layer 24, types of gas diffusion layers for constituting an anode electrode and a cathode electrode can be used, and the gas diffusion layer 24 is made from a porous conductive base material to efficiently supply the catalyst layers 22, 23 with a fuel gas as a fuel and an oxidant gas. Examples of the porous conductive base material include carbon paper and carbon cloth.

The separator 25 is not particularly limited, and may be, for example, one used in a known solid polymer fuel cell. The separator 25 can be any conductive plate as long as it is stable even in an environment within a fuel cell, and generally a plate of a metal, such as titanium, aluminum, copper, and stainless steel, having the gas flow path 26 formed thereon is used. Alternatively usable is, for example, one obtained by making the separator 25 from the above-mentioned metal, and forming on the surface of the metal a film made from a conductive material such as carbon, silver, chromium nitride, a platinum metal or an oxide thereof, and a conductive polymer.

The operating temperature of the solid polymer fuel cell 30 according to the present disclosure is not particularly limited. The solid polymer fuel cell 30 may be used in an operating temperature of, for example, 60°C or more, or even 100°C or more because the gasket member 10 has excellent hydrolysis resistance in a high-temperature environment. By increasing the use temperature of the fuel cell, the output density can be increased. The upper limit of the operating temperature of the solid polymer fuel cell 30 according to the present disclosure is, for example, 150°C or less.

EXAMPLES

Hereinafter, the present disclosure will be described in detail by way of examples and comparative examples. However, the present disclosure is not limited to examples.

<Production of gasket member for solid polymer fuel cell>

(Example 1)

A polysulfone (PSU) film (thickness 100 $\mu$m, Tg 180°C) was prepared as a base material layer. Next, to both surfaces of the base material layer was applied a resin composition (a two-component mixture of a polyester resin and hexamethylene diisocyanate) that contained a compound having an isocyanate group, to form an anchor coat layer (thickness 0.5 g/m$^2$). Further, on the surfaces of the anchor coat layers formed on both sides, an adhesive layer was formed by melt-extruding maleic anhydride-modified polypropylene (PPa) at a thickness of 50 $\mu$m, to give a gasket member (thickness 200 $\mu$m) for a solid polymer fuel cell, the gasket member including the adhesive layer (thickness 50 $\mu$m), the anchor coat layer (thickness 0.5 g/m$^2$), the base material layer (thickness 100 $\mu$m), the anchor coat layer (thickness 0.5 g/m$^2$), and the adhesive layer (thickness 50 $\mu$m) layered in this order.

(Example 2)

A gasket member (thickness 200 $\mu$m) for a solid polymer fuel cell was obtained in the same manner as in Example 1 except that in place of the polysulfone (PSU) film, a polyether sulfone (PESU) film (thickness 100 $\mu$m, Tg 220°C) was used as a base material layer, the gasket member including an adhesive layer (thickness 50 $\mu$m), an anchor coat layer (thickness 0.5 g/m$^2$), a base material layer (thickness 100 $\mu$m), an anchor coat layer (thickness 0.5 g/m$^2$), and an adhesive layer (thickness 50 $\mu$m) layered in this order.

(Example 3)

A gasket member (thickness 200 $\mu$m) for a solid polymer fuel cell was obtained in the same manner as in Example 1 except that in place of the polysulfone (PSU) film, a polyphenylsulfone (PPSU) film (thickness 100 $\mu$m, Tg 220°C) was used as a base material layer, the gasket member including an adhesive layer (thickness 50 $\mu$m), an anchor coat layer (thickness 0.5 g/m$^2$), a base material layer (thickness 100 $\mu$m), an anchor coat layer (thickness 0.5 g/m$^2$), and an adhesive layer (thickness 50 $\mu$m) layered in this order.

(Example 4)

A gasket member (thickness 200 $\mu$m) for a solid polymer fuel cell was obtained in the same manner as in Example 3 except that in place of "the resin composition (the two-component mixture of a polyester resin and hexamethylene diisocyanate) that contained a compound having an isocyanate group", "a two-component urethane (a two-component mixture of polycarbonate diol and polymethylene polyphenyl polyisocyanate)" was used as a resin composition (anchor-coat material) for forming an anchor coat layer, the gasket member including an adhesive layer (thickness 50 $\mu$m), an anchor coat layer (thickness 0.5 g/m$^2$), a base material layer (thickness 100 $\mu$m), an anchor coat layer (thickness 0.5 g/m$^2$), and an adhesive layer (thickness 50 $\mu$m) layered in this order.

(Example 5)

A gasket member (thickness 200 $\mu$m) for a solid polymer fuel cell was obtained in the same manner as in Example 3 except that in place of "the resin composition (the two-component mixture of a polyester resin and hexamethylene diisocyanate) that contained a compound having an isocyanate group", "triphenylmethane-4,4',4" -triisocyanate (one-component curing type)" was used as a resin composition (anchor-coat material) for forming an anchor coat layer, the gasket member including an adhesive layer (thickness 50 $\mu$m), an anchor coat layer (thickness 0.5 g/m$^2$), a base material layer (thickness 100 $\mu$m), an anchor coat layer (thickness 0.5 g/m$^2$), and an adhesive layer (thickness 50 $\mu$m) layered in this order.

(Example 6)

A gasket member (thickness 200 $\mu$m) for a solid polymer fuel cell was obtained in the same manner as in Example 3 except that in place of "the resin composition (the two-component mixture of a polyester resin and hexamethylene diisocyanate) that contained a compound having an isocyanate group", "polymethylene polyphenyl polyisocyanate (one-component curing type)" was used as a resin composition (anchor-coat material) for forming an anchor coat layer, the gasket member including an adhesive layer (thickness 50 $\mu$m), an anchor coat layer (thickness 0.5 g/m$^2$), a base material layer (thickness 100 $\mu$m), an anchor coat layer (thickness 0.5 g/m$^2$), and an adhesive layer (thickness 50 $\mu$m) layered in this order.

(Example 7)

A gasket member (thickness 200 $\mu$m) for a solid polymer fuel cell was obtained in the same manner as in Example 3 except that in place of "the resin composition (the two-component mixture of a polyester resin and hexamethylene diisocyanate) that contained a compound having an isocyanate group", "a polyisocyanate of hexamethylene diisocyanate (one-component curing type)" was used as a resin composition (anchor-coat material) for forming an anchor coat layer, the gasket member including an adhesive layer (thickness 50 $\mu$m), an anchor coat layer (thickness 0.5 g/m$^2$), a base material layer (thickness 100 $\mu$m), an anchor coat layer (thickness 0.5 g/m$^2$), and an adhesive layer (thickness 50 $\mu$m) layered in this order.

(Comparative Example 1)

A gasket member (thickness 200 $\mu$m) for a solid polymer fuel cell was obtained in the same manner as in Example 1 except that in place of the polysulfone (PSU) film, a polyethylene naphthalate (PEN) film (thickness 100 $\mu$m, Tg 155°C) generally used as a base material layer of a gasket member for a solid polymer fuel cell was used as a base material layer, the gasket member including an adhesive layer (thickness 50 $\mu$m), an anchor coat layer (thickness 0.5 g/m$^2$), a base material layer (thickness 100 $\mu$m), an anchor coat layer (thickness 0.5 g/m$^2$), and an adhesive layer (thickness 50 $\mu$m) layered in this order.

<Retention of elongation at break (evaluation of hydrolysis resistance in high-temperature environment)>

The gasket members for a solid polymer fuel cell produced in the examples and comparative examples were measured for retention of elongation at break (%) after left in 120°C water (in heat-resistant pressure-resistant container) for 300 hours under the measurement conditions below. The results are shown in Table 1. A sample is measured for elongation at break after immersed in 120°C water and left for 300 hours, and the obtained measured value was divided by the elongation at break (initial elongation at break) before the endurance test to obtain a retention of elongation at break. The elongation at break was measured by cutting a film into a 15-mm wide (TD) 50-mm long (MD) rectangle, and measuring the elongation of the rectangular film to its break by pulling it using a tensile tester under the conditions of a tensile speed of 200 mm/min and a gauge length of 20 mm. The test environment is 23°C and the average value of three measurements was used.

$$\text{Retention of elongation at break } (\%) = \text{elongation at break after endurance}$$

$$\text{test/elongation at break before endurance test (initial elongation at break)} \times 100$$

<Adhesive strength to separator>

The gasket members for a solid polymer fuel cell produced in the examples and comparative examples were measured for adhesive strength (N) to a stainless steel plate (SUS304) used as the separator under the measurement conditions below. The results are shown in Table 1. The peeling strength in a 25°C environment was measured as follows in accordance with the specification of JIS K7127: 1999. A rectangle sample having a width in the transverse direction of 15 mm was cut out from the sample, the metal and the adhesive layer were bonded by heat pressing to prepare a measurement sample. Next, the measurement sample was set in a tensile tester and measured for adhesive strength (peeling strength) between the metal layer and the adhesive layer under the conditions of a tensile speed of 300 mm/min and a gauge length of 50 mm, and the maximum strength at peel-off was defined as sealing strength (N/15 mm). The average value of three measurements was used. The heat pressing conditions were fixed at a temperature of 170°C, a surface pressure of 1 MPa, and a pressing time of 20 seconds (s), and the measurement was performed with the temperature changed. The peeling direction was set to the 180° direction, and the size of the adhesive portion of the stainless steel plate (SUS304) in the measurement sample was 15-mm wide and 30-mm long.

<Measurement of hot-shrinkage rate at 180°C>

The hot-shrinkage rate was obtained by heating a test piece, which was obtained by cutting the gasket member into a size of 10 cm length (MD) × 10 cm width (TD), in an oven at 180°C for 30 minutes, obtaining a size change ratio between before and after the heating of the test piece in the length direction and the width direction (two directions perpendicular to each other) on the basis of the following equation (I), and calculating, as the average values, absolute values of the size change ratios in the two directions.

$$\text{Hot-shrinkage rate (\%)} = \{(X - Y)/X\} \times 100 \text{ (I)}$$

[X: size before heat treatment in oven, Y: size after heat treatment in oven]

[Table 1]

| Table 1 | Base material layer | Anchor coat layer (Anchor-coat material) | Adhesive layer | Retention of elongation at break (%) after left in 120°C water for 300 hours | Adhesive strength to SUS304 (N/15 mm) | Hot-shrink age rate in MD [%] | Hot-shrink age rate in TD [%] |
|---|---|---|---|---|---|---|---|
| Example 1 | PSU film | Resin composition that contains compound having isocyanate group (two-component mixture of polyester resin and hexamethylene diisocyanate) | PPa | 85 | 31 | 0.40% | 0.20% |
| Example 2 | PESU film | | | 84 | 31 | 0.30% | 0.27% |
| Example 3 | PPSU film | | | 93 | 30 | 0.33% | 0.16% |
| Example 4 | PPSU film | Two-component urethane (two-component mixture of polycarbonate diol and polymethylene polyphenyl polyisocyanate) | | 93 | 31 | 0.33% | 0.16% |
| Example 5 | PPSU film | Triphenylmethane-4,4',4"-triisocyanate (one-component curing type) | | 93 | 31 | 0.33% | 0.16% |
| Example 6 | PPSU film | Polymethylene polyphenyl polyisocyanate (one-component curing type) | | 93 | 31 | 0.33% | 0.16% |
| Example 7 | PPSU film | Polyisocyanate of hexamethylene diisocyanate (one-component curing type) | | 93 | 31 | 0.33% | 0.16% |
| Comparative Example 1 | PEN film | Resin composition that contains compound having isocyanate group (two-component mixture of polyester resin and hexamethylene diisocyanate) | | 56 | 32 | 1.50% | 0.53% |

The gasket members according to Examples 1 to 7 included a laminate including a base material layer and an adhesive layer disposed on both sides of the base material layer, had a retention of elongation at break of 60% or more after left in 120°C water for 300 hours, and had excellent hydrolysis resistance in a high-temperature environment. The gasket members according to Examples 1 to 7 also had good adhesiveness to the separator.

As described above, the present disclosure provides the invention of aspects as shown below.

Item 1. A gasket member for a solid polymer fuel cell, the gasket member including a laminate that includes at least a base material layer and an adhesive layer disposed on both sides of the base material layer, the laminate having a retention of elongation at break of 60% or more after left in 120°C water for 300 hours.

Item 2. The gasket member for a solid polymer fuel cell according to item 1, wherein the base material layer contains at least one selected from the group consisting of polysulfone, polyether sulfone, polyphenylsulfone, polyarylate, a polyolefin, a polyamide, a polyimide, polyether ether ketone, polymethyltenpene, polyphenylene oxide, polyphenylene sulfide, a fluororesin, and a metal.

Item 3. The gasket member for a solid polymer fuel cell according to item 1 or 2, wherein the base material layer is a nonwoven fabric.

Item 4. The gasket member for a solid polymer fuel cell according to any one of items 1 to 3, including an anchor coat layer on at least one of surfaces of the base material layer.

Item 5. The gasket member for a solid polymer fuel cell according to any one of items 1 to 4, wherein the base material layer has a thickness of 20 $\mu$m or more and 200 $\mu$m or less.

Item 6. The gasket member for a solid polymer fuel cell according to any one of items 1 to 5, wherein the adhesive layer has a thickness of 10 $\mu$m or more and 100 $\mu$m or less.

Item 7. A gasket member-attached electrode-electrolyte membrane laminate including:

an electrode-electrolyte membrane laminate obtained by disposing a catalyst layer and a gas diffusion layer on both surfaces of an electrolyte membrane; and

a gasket member disposed to cover an outer periphery of the electrode-electrolyte membrane laminate and having a frame shape,

the gasket member including a laminate that includes at least a base material layer and an adhesive layer disposed on both sides of the base material layer, and

the laminate having a retention of elongation at break of 60% or more after left in 120°C water for 300 hours.

Item 8. The gasket member-attached electrode-electrolyte membrane laminate according to item 7, wherein the base material layer contains at least one selected from the group consisting of polysulfone, polyether sulfone, polyphenylsulfone, polyarylate, a polyolefin, a polyamide, a polyimide, polyether ether ketone, polymethyltenpene, polyphenylene oxide, polyphenylene sulfide, a fluororesin, and a metal.

Item 9. The gasket member-attached electrode-electrolyte membrane laminate according to item 7 or 8, wherein the base material layer is a nonwoven fabric.

Item 10. The gasket member-attached electrode-electrolyte membrane laminate according to any one of items 7 to 9, including an anchor coat layer on at least one of surfaces of the base material layer.

Item 11. The gasket member-attached electrode-electrolyte membrane laminate according to any one of items 7 to 10, wherein the base material layer has a thickness of 20 $\mu$m or more and 200 $\mu$m or less.

Item 12. The gasket member-attached electrode-electrolyte membrane laminate according to any one of items 7 to 11, wherein the adhesive layer has a thickness of 10 $\mu$m or more and 100 $\mu$m or less.

Item 13. A solid polymer fuel cell including the gasket member-attached electrode-electrolyte membrane laminate according to any one of items 7 to 12.

Item 14. A method for producing a gasket member for a solid polymer fuel cell, the gasket member including a laminate that includes at least a base material layer and an adhesive layer disposed on both sides of the base material layer, the method including

a step of layering the adhesive layer on both sides of the base material layer,

the laminate having a retention of elongation at break of 60% or more after left in 120°C water for 300 hours.

DESCRIPTION OF REFERENCE SIGNS

1: Base material layer
2: Adhesive layer
3: Anchor coat layer
10: Gasket member
11: Aperture
20: Gasket member-attached electrode-electrolyte membrane laminate
21: Electrolyte membrane
22, 23: Catalyst layer
24: Gas diffusion layer
25: Separator
26: Gas flow path
30: Solid polymer fuel cell

**Claims**

1. A gasket member for a solid polymer fuel cell, the gasket member comprising a laminate that includes at least a base material layer and an adhesive layer disposed on both sides of the base material layer, the laminate having a retention of elongation at break of 60% or more after left in 120°C water for 300 hours.

2. The gasket member for a solid polymer fuel cell according to claim 1, wherein the base material layer contains at least one selected from the group consisting of polysulfone, polyether sulfone, polyphenylsulfone, polyarylate, a polyolefin, a polyamide, a polyimide, polyether ether ketone, polymethyltenpene, polyphenylene oxide, polyphenylene sulfide, a fluororesin, and a metal.

3. The gasket member for a solid polymer fuel cell according to claim 1 or 2, wherein the base material layer is a nonwoven fabric.

4. The gasket member for a solid polymer fuel cell according to any one of claims 1 to 3, comprising an anchor coat layer on at least one of surfaces of the base material layer.

5. The gasket member for a solid polymer fuel cell according to any one of claims 1 to 4, wherein the base material layer has a thickness of 20 $\mu$m or more and 200 $\mu$m or less.

6. The gasket member for a solid polymer fuel cell according to any one of claims 1 to 5, wherein the adhesive layer has a thickness of 10 $\mu$m or more and 100 $\mu$m or less.

7. A gasket member-attached electrode-electrolyte membrane laminate comprising:

   an electrode-electrolyte membrane laminate obtained by disposing a catalyst layer and a gas diffusion layer on both surfaces of an electrolyte membrane; and
   a gasket member disposed to cover an outer periphery of the electrode-electrolyte membrane laminate and having a frame shape,
   the gasket member including a laminate that includes at least a base material layer and an adhesive layer disposed on both sides of the base material layer, and
   the laminate having a retention of elongation at break of 60% or more after left in 120°C water for 300 hours.

8. The gasket member-attached electrode-electrolyte membrane laminate according to claim 7, wherein the base material layer contains at least one selected from the group consisting of polysulfone, polyether sulfone, polyphenylsulfone, polyarylate, a polyolefin, a polyamide, a polyimide, polyether ether ketone, polymethyltenpene, polyphenylene oxide, polyphenylene sulfide, a fluororesin, and a metal.

9. The gasket member-attached electrode-electrolyte membrane laminate according to claim 7 or 8, wherein the base material layer is a nonwoven fabric.

10. The gasket member-attached electrode-electrolyte membrane laminate according to any one of claims 7 to 9, comprising an anchor coat layer on at least one of surfaces of the base material layer.

11. The gasket member-attached electrode-electrolyte membrane laminate according to any one of claims 7 to 10, wherein the base material layer has a thickness of 20 $\mu$m or more and 200 $\mu$m or less.

12. The gasket member-attached electrode-electrolyte membrane laminate according to any one of claims 7 to 11, wherein the adhesive layer has a thickness of 10 $\mu$m or more and 100 $\mu$m or less.

13. A solid polymer fuel cell comprising the gasket member-attached electrode-electrolyte membrane laminate according to any one of claims 7 to 12.

14. A method for producing a gasket member for a solid polymer fuel cell, the gasket member including a laminate that includes at least a base material layer and an adhesive layer disposed on both sides of the base material layer, the method comprising

   a step of layering the adhesive layer on both sides of the base material layer,

the laminate having a retention of elongation at break of 60% or more after left in 120°C water for 300 hours.

FIG. 1

FIG. 2

FIG. 3

FIG. 4

FIG. 5

FIG. 6

FIG. 7

## INTERNATIONAL SEARCH REPORT

| International application No. |
|---|
| **PCT/JP2022/005319** |

### A. CLASSIFICATION OF SUBJECT MATTER

*H01M 8/0273*(2016.01)i; *B32B 27/00*(2006.01)i; *F16J 15/10*(2006.01)i; *H01M 8/10*(2016.01)i
FI:  H01M8/0273; B32B27/00 D; F16J15/10 X; H01M8/10 101

According to International Patent Classification (IPC) or to both national classification and IPC

### B. FIELDS SEARCHED

Minimum documentation searched (classification system followed by classification symbols)

H01M8/0273; B32B27/00; F16J15/10; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-40515 A (DAINIPPON PRINTING CO LTD) 18 February 2010 (2010-02-18) | 1-14 |
| A | JP 2010-80437 A (DAINIPPON PRINTING CO LTD) 08 April 2010 (2010-04-08) | 1-14 |
| A | JP 2009-81118 A (DAINIPPON PRINTING CO LTD) 16 April 2009 (2009-04-16) | 1-14 |
| A | JP 2013-110048 A (TORAY IND INC) 06 June 2013 (2013-06-06) | 1-14 |
| A | JP 2007-167852 A (UBE IND LTD) 05 July 2007 (2007-07-05) | 1-14 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/005319**

| Patent document cited in search report | | | Publication date (day/month/year) | Patent family member(s) | | | Publication date (day/month/year) |
|---|---|---|---|---|---|---|---|
| JP | 2010-40515 | A | 18 February 2010 | (Family: none) | | | |
| JP | 2010-80437 | A | 08 April 2010 | (Family: none) | | | |
| JP | 2009-81118 | A | 16 April 2009 | US | 2009/0087713 | A1 | |
| | | | | US | 2013/0252133 | A1 | |
| | | | | DE | 102008048720 | A1 | |
| JP | 2013-110048 | A | 06 June 2013 | (Family: none) | | | |
| JP | 2007-167852 | A | 05 July 2007 | (Family: none) | | | |

Form PCT/ISA/210 (patent family annex) (January 2015)

**REFERENCES CITED IN THE DESCRIPTION**

**Patent documents cited in the description**

- JP 2013218876 A